# EUROPEAN PATENT APPLICATION

(11) **EP 4 764 710 A1**
(43) Date of publication of application: **24.06.2026**
(21) Application number: 25219023.6
(22) Date of filing: 27.11.2025
(51) Int. Cl.: G03G 21/16, G03G 15/00

(54) **IMAGE FORMING APPARATUS**

(30) Priority: 20.12.2024 JP 2024225633
(71) Applicant: ETRIA Co., Ltd., Yokohama, Kanagawa 220-0011 (JP)
(72) Inventor: AKITA, Ryosuke, Yokohama (JP)
(74) Representative: J A Kemp LLP

(57) **Abstract**

An image forming apparatus (1) includes: an apparatus body (100); an image forming unit (10) in the apparatus body, the image forming unit (10) configured to form an image on a medium; a document reader (200) including: a document feeding portion (210) configured to feed a document before reading; a document reading portion (220) configured to read an image on the document fed from the document feeding portion (210) through a document conveyance path in a document conveyance direction (X); and a document ejection portion (230) configured to stack the document ejected from the document reading portion, and the document reading portion (220) includes a housing assembly (228a) configured to open to expose the document conveyance path in the document reading portion (220).

## Description

### BACKGROUND

### Technical Field

The present embodiment relates to an image forming apparatus.

### Related Art

An image forming apparatus includes an apparatus body including an image forming unit that forms an image on a recording medium, and a document reader that reads a document provided on the apparatus body.

For example, Japanese Unexamined Patent Application Publication No. 2007-217178 discloses such an image forming apparatus in which a document reader is disposed on an image forming apparatus body and a document conveyor is disposed on the document reader. The document conveyor includes a document feeding portion, a document ejection portion, and a conveying unit that conveys a document along a conveyance path between both placing portions. The conveyance path of the document includes a document reading position of the document reader. In the document conveyor, a housing assembly for exposing the document conveyance path is openable.

However, in the image forming apparatus of Japanese Unexamined Patent Application Publication No. 2007-217178, a portion located outside the side face of the image forming apparatus body is generated in the housing assembly in an opened state, and it is necessary to widen the installation region of the image forming apparatus by that amount.

### SUMMARY

The present disclosure described herein provides an image forming apparatus includes: an apparatus body; an image forming unit in the apparatus body, the image forming unit configured to form an image on a medium; a document reader including: a document feeding portion configured to place a document before reading; a document reading portion configured to read an image on the document fed from the document feeding portion through a document conveyance path in a document conveyance direction; and a document ejection portion configured to place the document ejected from the document reading portion, and the document reading portion includes a housing assembly configured to open to expose the document conveyance path in the document reading portion, and the housing assembly is disposed inside a side face of apparatus body in the document conveyance direction when the housing assembly is opened.

According to the present embodiment, it is not necessary to widen the installation region of the image forming apparatus by the opening of the housing assembly of the document reading portion, and it is possible to avoid enlargement of the installation region by enabling the housing assembly of the document reading portion to be openable.

### BRIEF DESCRIPTIONS OF DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic explanatory front view of a copier;
FIGS. 2A and 2B are explanatory views of a sheet feeding portion and a main cover of the copier;
FIG. 3 is a schematic explanatory front view of a document reader of the copier;
FIG. 4 is a schematic explanatory front view of an external appearance of the copier;
FIG. 5 is an explanatory view of paper jam elimination processing of a document in the copier;
FIGS. 6A and 6B are schematic explanatory front views of an example of an upper casing of the copier;
FIG. 7 is an explanatory view of a protrusion amount of a document feeding portion of the copier;
FIG. 8 is an explanatory view of another configuration example of the document feeding portion of the copier;
FIGS. 9A and 9B are plan views of the configuration example;
FIGS. 10A and 10B are explanatory views of the configuration example;
FIG. 11 is an explanatory view of still another configuration example of the document feeding portion of the copier;
FIG. 12 is an explanatory view of a copier according to a comparative example;
FIG. 13 is another explanatory view of the copier; and
FIG. 14 is still another explanatory view of the copier.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

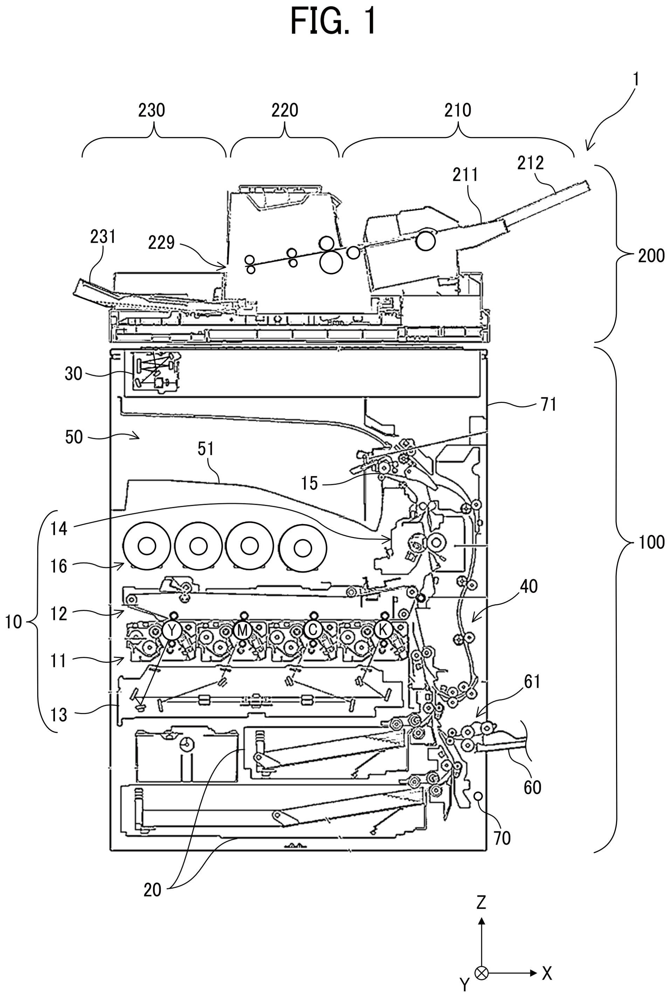

Hereinafter, an embodiment of a copier as an image forming apparatus according to the present embodiment will be described. FIG. 1 is a schematic explanatory front view of a copier 1. The copier 1 includes a copier body 100 that is an apparatus body provided with an image forming unit that forms an image on a recording medium, and a document reader 200 that reads a document provided on the copier body 100. In FIG. 1, an X direction is a horizontal direction (a right-left direction or a width direction) as viewed from the front of the image forming apparatus, a Y direction is an apparatus depth direction, and a Z direction is a vertical direction. First, a configuration example of an internal structure of the copier body 100 and the document reader 200 will be described.

An image forming unit 10 is provided in the copier body 100. A sheet feeder 20, a scanner unit 30, and a sheet reverser 40 are provided. The sheet reverser 40 includes a "medium conveyance path" through which the recording medium is conveyed.

The image forming unit 10 includes four process cartridges 11 (Y, M, C, and K), an intermediate transfer belt 12, an optical writing unit 13, a fixing device 14, a sheet ejection roller 15, and the like. A front surface and a left side face are opened to the outside between the image forming unit 10 and the scanner unit 30, and a so-called in-body ejector 50 for stacking recorded sheets ejected from the sheet ejection roller 15 is formed.

The intermediate transfer belt 12 is an intermediate transfer member that is stretched around a plurality of stretching rollers and moves on the surface counterclockwise in FIG. 1. Reference numerals Y, M, C, and K of the four process cartridges 11 indicate photoconductors for yellow, magenta, cyan, and black. The four process cartridges 11 have substantially the same configuration except that colors of toner to be used are different.

The process cartridge 11 has a unit-shaped configuration in which a charging unit, a developing unit, and the like are integrally supported around a photoconductor which is a latent image bearer.

The optical writing unit 13 forms an electrostatic latent image on the photoconductor on the basis of image information of a document image read by the scanner unit 30 or the document reader 200 or image information input from an external device such as a personal computer. The electrostatic latent image is formed into a toner image by a developing unit, and the toner images are superimposed on the intermediate transfer belt 12 to form a full-color image on the intermediate transfer belt 12.

The scanner unit 30 reads image information while scanning a document placed on a contact glass disposed on the upper portion of the copier body 100 in the right-left direction. The document reader 200 is attached so as to be openable and closable so as to open and close the contact glass by swinging about a rotation shaft extending to the right and left on the back side of the copier body 100. In a case where the copier body 100 is configured to form an image using only image information of a document image read by the document reader 200, the scanner unit 30 can also be excluded.

The full-color image on the intermediate transfer belt 12 is transferred to a transfer sheet that is a recording medium fed and conveyed from the sheet feeder 20. The full-color image is fixed to the transfer sheet to which the full-color image has been transferred by heating and pressurization in the fixing device 14, and the transfer sheet to which the image has been fixed is ejected from a sheet ejection port (on the wall) by the sheet ejection roller 15. The transfer sheet ejected from the sheet ejection port is stacked on a discharged sheet receiving unit 51 provided in the in-body ejector 50.

In the copier body 100 of FIG. 1, a toner bottle 16 that stores each color toner is detachably disposed above the intermediate transfer belt 12 with respect to the copier body 100. An openable sheet feeding portion 60 is provided on the right-side face portion of the copier body 100, and a sheet feeding unit 61 for feeding a transfer sheet on the sheet feeding portion 60 is also provided in the copier body 100.

The conveying roller and the guide plate constituting the sheet reverser 40, and the sheet feeding portion 60 and the sheet feeding unit 61 are held by a main cover 71 provided in an openable manner by a rotation shaft 70 provided in a lower right portion of the copier body 100. When the main cover 71 is opened, the delivery path is opened from the sheet feeder 20 to the sheet ejection roller 15, and paper jam elimination processing or the like can be performed.

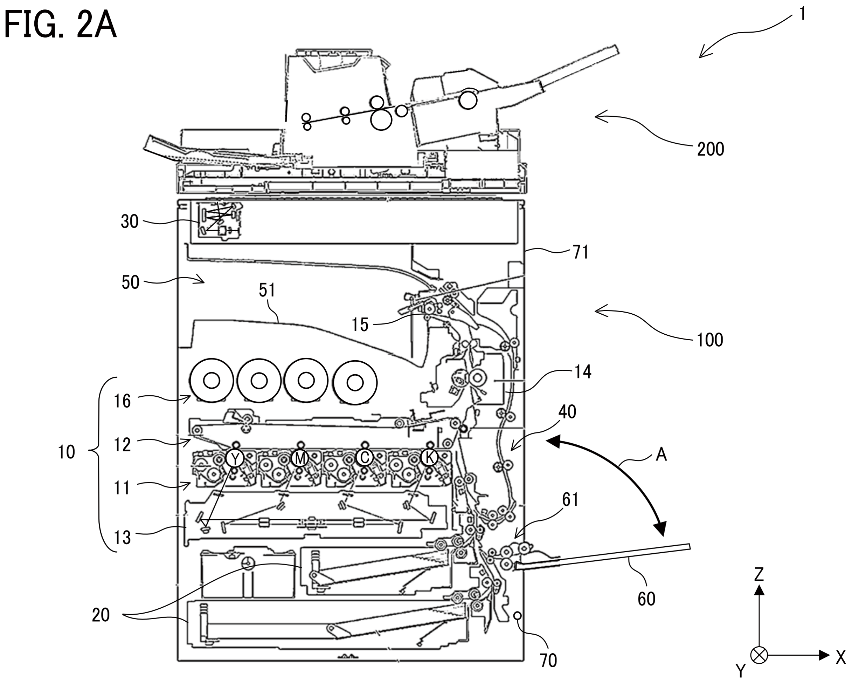

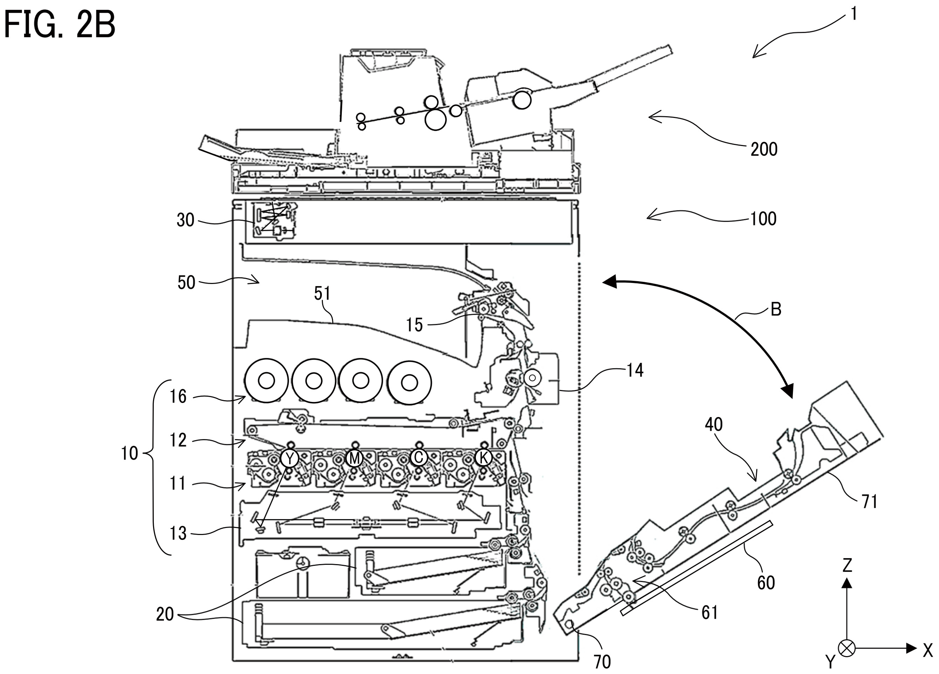

FIG. 2A is an explanatory view of a state where the sheet feeding portion 60 is opened, and FIG. 2B is an explanatory view of a state where the main cover 71 is opened. The above description is a configuration example of the copier body 100 in a case where the electrophotographic method is adopted as a recording method, but other recording methods such as an inkjet method may be adopted instead.

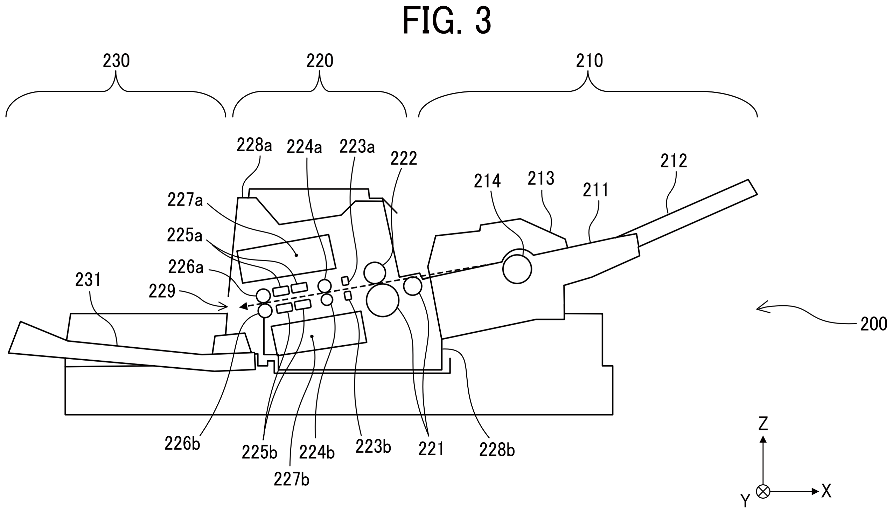

FIG. 3 is a schematic explanatory front view of the document reader 200. The document reader 200 includes a document feeding portion 210, a document reading portion 220, and a document ejection portion 230. The document feeding portion 210, the document reading portion 220, and the document ejection portion 230 are arranged in this order in the horizontal direction as viewed from the front of the image forming apparatus, and the conveyance path of the document is a so-called straight path.

The document feeding portion 210 includes a document table 211 and a drawable document table 212 that is drawn-out and storable from the document table 211. Instead of being drawn-out and storable, a swing shaft or the like may be provided at the right end of the document table 211 in the drawing so as to be foldable and extendable. The document table 211 includes a chute roller 214 that comes into contact with the lower surface of the document to apply a conveying force.

The document reading portion 220 includes a pickup roller 221, a brake roller 222, a document detection sensor 223 (223a, 223b), a conveying roller 224 (224a, 224b), a lighting device 225 (back side lighting device 225a and front side lighting device 225b) including an LED, and an ejection roller 226 (226a, 226b) along a conveyance path (indicated by a broken line in the drawing) along which a document from the document feeding portion 210 is conveyed. A back side reading optical device 227a and a front side reading optical device 227b are provided.

The document reading portion 220 includes an upper casing 228a and a lower casing 228b, which openably supports the upper casing 228a, with the conveyance path interposed between the upper casing 228a and the lower casing 228b, a lower surface of the upper casing 228a forms an upper guide of the conveyance path of the document, and an upper surface of the lower casing 228b forms a lower guide of the conveyance path of the document. The upper casing 228a is an example of a "housing assembly" that houses the back side reading optical device 227a, the ejection roller 226a, the back side lighting device 225a, the conveying roller 224a, the document detection sensor 223a, and the brake roller 222.

The document ejection portion 230 is provided with a document ejection portion 231.

The document (in a case where two or more documents are placed, the document at the bottom) placed on the document table 211 is conveyed in the document conveying direction from right to left in the drawing between the upper guide and the lower guide by rotation of the chute roller 214 and the pickup roller 221. In a case where a plurality of documents is placed on the document table 211, only the documents in contact with the pickup roller 221 among the documents placed on the document table 211 are separated by the brake roller 222.

The document is sent between a driving roller 224a and a driven roller 224b of the conveying roller 224 while being guided by the upper guide and the lower guide. The document is sent between the back side lighting device 225a and the front side lighting device 225b by the rotation of the conveying roller 224, and the back surface and the front surface are read by the back side reading optical device 227a and the front side reading optical device 227b. The read document is ejected onto the document ejection portion 231 through the document ejection port 229 by rotation of the ejection roller 226 (226a, 226b).

The document reader 200 includes only a straight reading path (straight path) from the document table 211 to the document ejection portion 231, not a document reverse path or a U-turn path. Therefore, space saving of the document reading portion and improvement of document visibility after reading can be achieved.

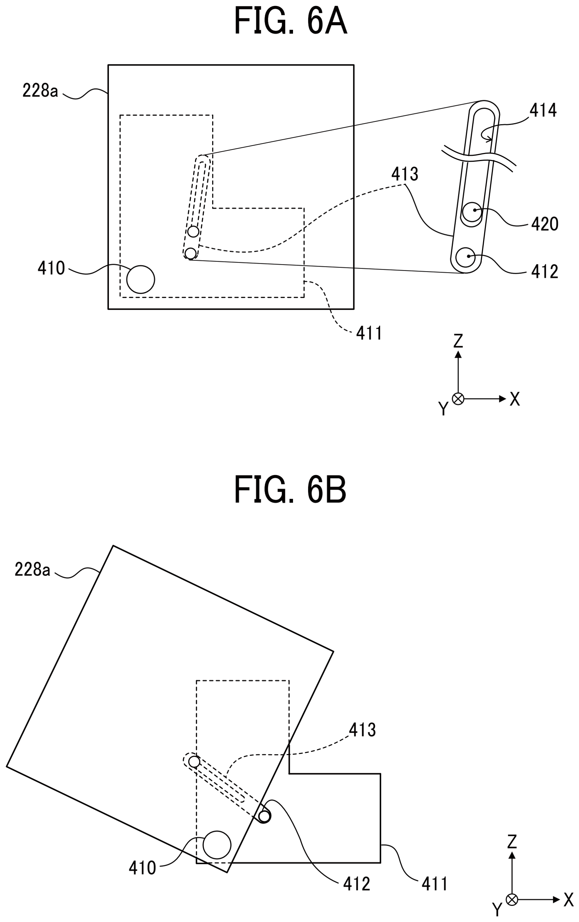

Opening and closing of the housing assembly for exposing an inner conveyance path in the document reader 200, which is a characteristic portion in the following present embodiment, will be described. As described above, in the image forming apparatus of Japanese Unexamined Patent Application Publication No. 2007-217178, when the housing assembly for exposing the document conveyance path is opened, the housing assembly protrudes outward from the side face of the image forming apparatus body, and the installation region of the image forming apparatus needs to be widened by that amount (see FIGS. 1, 6A, and 6B of the same publication). In the structure example of the image forming apparatus illustrated in FIG. 1 of the same publication, since the sheet ejection portion exists on the side face portion of the image forming apparatus body from which the housing assembly protrudes outward and the protrusion amount of the sheet ejection example is larger, it is possible to avoid an increase in the installation area only by the protrusion of the housing assembly, but there is a restriction that the sheet ejection portion is provided so as to protrude from the side face.

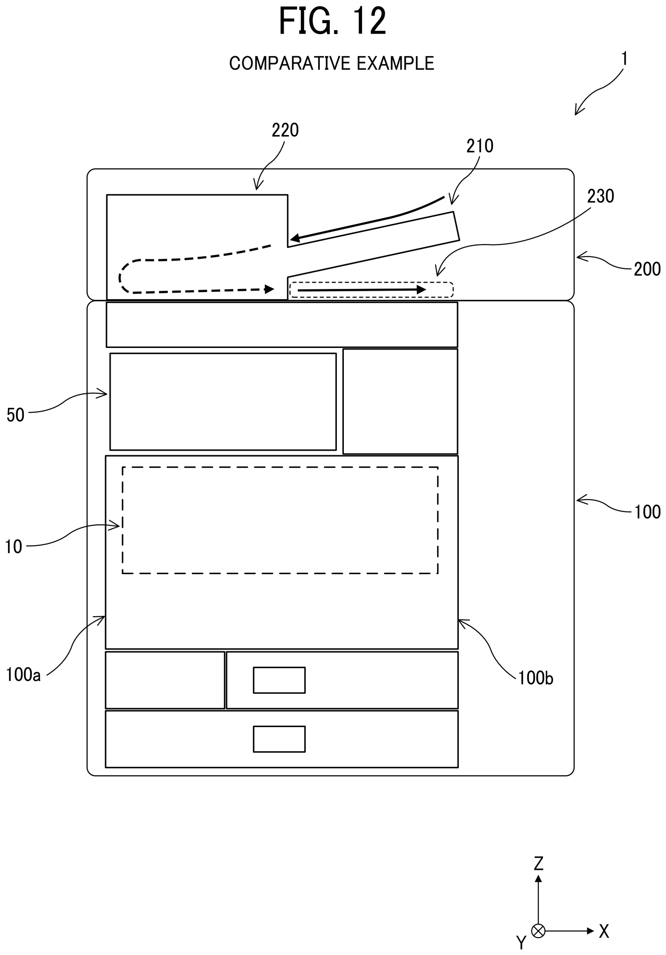

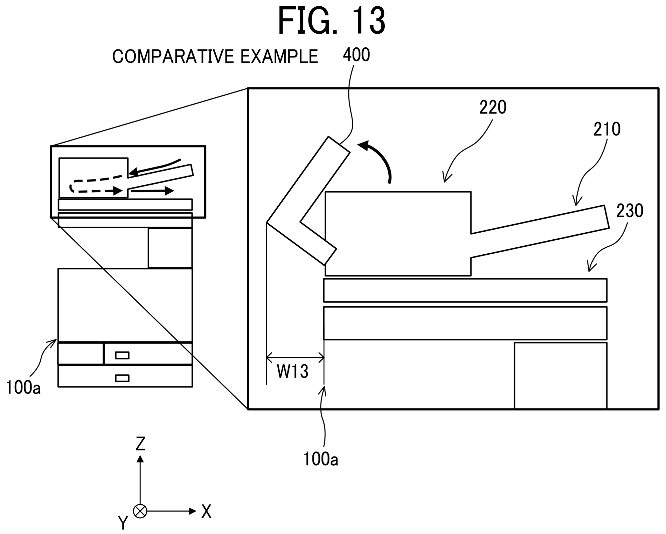

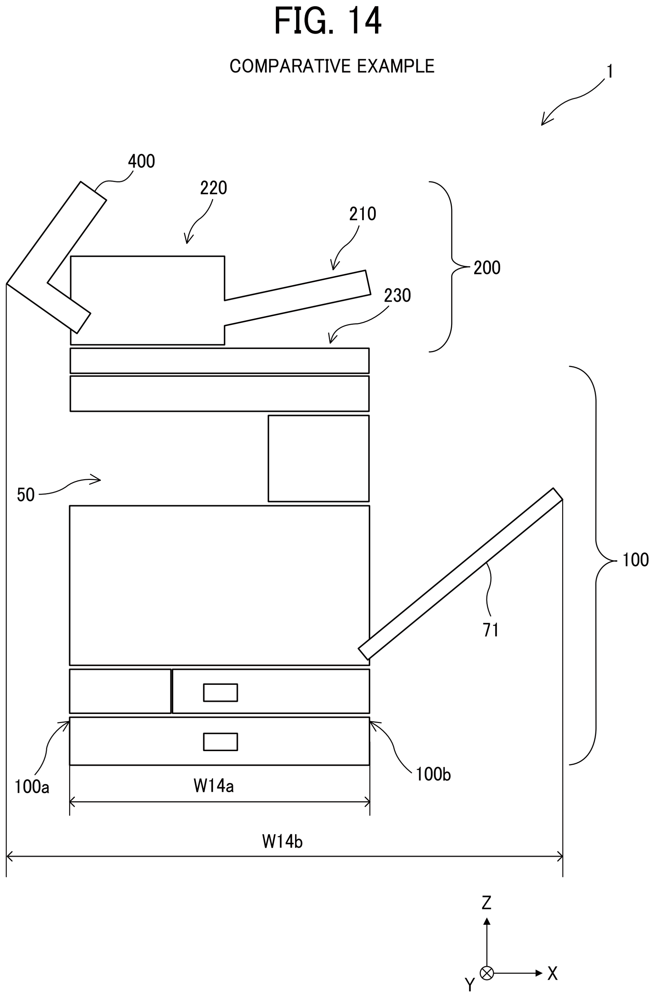

With reference to FIGS. 12 to 14, an image forming apparatus, according to a comparative example, which employs an in-body ejector and does not include a sheet ejection portion that protrudes from the image forming apparatus body will be described as an example, and a defect caused by protrusion of a housing assembly for exposing an inner conveyance path in the document reader 200 from a side face of the image forming apparatus body will be described. FIG. 12 is a front view illustrating an external appearance of the copier 1 according to the comparative example, FIG. 13 is an explanatory view illustrating a state where an openable housing assembly 400 for exposing a document conveying path of the document reader 200 is opened, and FIG. 14 is an explanatory view illustrating a state where the main cover 71 of the copier body 100 is also opened in addition to the housing assembly 400.

In FIGS. 12 to 14, members corresponding to the members described in FIGS. 1 to 3 are denoted by the same reference numerals. In the document reader 200 of the illustrated comparative example, unlike the present embodiment, the conveyance path of the document is not a straight path but a so-called U-turn path (reverse path).

In many cases, the image forming apparatus includes a document reader that reads a document and an automatic document feeder (ADF) that automatically feeds a document in an upper portion of the apparatus body; however, in order to meet a demand for downsizing of the apparatus and reduction of an installation region, the document reader and the ADF are arranged so that the sizes do not exceed the size of the image forming apparatus itself.

As a conveyance path of a document in the ADF, a so-called U-turn path method is often adopted, in which a document ejector exists immediately below a place where a read document is placed, and in this case, the document reading portion of the ADF is not arranged at the center in the upper portion of the image forming apparatus but is arranged to be biased to either the right or the left. Therefore, in a case where the document is jammed during the operation of the ADF (= in a case where a paper jam occurs), when the cover of the document reading portion of the ADF is opened to remove the jammed sheet, the size of the cover greatly exceeds the size of the image forming apparatus body when the cover is opened. Therefore, it is necessary to secure an installation region of the image forming apparatus in consideration of the movable range of the cover of the image reader or the ADF.

As illustrated in FIG. 12, the document reader 200 having an ADF function of the U-turn path method, including the document feeding portion 210, is within the widths of a left side face 100a and a right-side face 100b of the copier body 100. From the viewpoint of a user, the smaller and lighter the image forming apparatus, the higher the degree of freedom of installation. Since an image reader that can read an image by a pressure plate is provided above an image forming apparatus in many cases, the size of the reading portion cannot be made smaller than the size of the corresponding medium (A3, A4, etc.). Therefore, it is preferable to reduce the size of the machine to the size of the compatible medium as much as possible to increase the degree of freedom of installation of the user.

In the image forming apparatus, the image reader, and the ADF, a paper jam may occur during image formation or document reading due to their characteristics. In that case, since it is necessary to open the opening/closing cover (housing assembly) provided for paper jam elimination processing and remove the jammed sheet, it is necessary to secure a region where the opening/closing cover can be moved in advance in the installation place.

As illustrated in FIG. 13, when the housing assembly 400 is not opened, the ADF is not larger than the size of the image forming apparatus body, but the size of the ADF exceeds the size of the apparatus body by opening the housing assembly 400 of the ADF at the time of paper jam elimination processing or the like. In the drawing, the dimension exceeding the size of the apparatus body is denoted by reference numeral W13.

As described above, since the occurrence of the paper jam occurs not only in the document reader 200 but also in the copier body 100, as illustrated in FIG. 14, it is necessary to secure an area in which the main cover 71 of the copier body 100 can be opened in the installation place in advance. In a case where the side face on which the housing assembly 400 of the document reader 200 is opened is different from the side face on which the main cover 71 of the copier body 100 is opened, it is necessary to secure an installation region extremely larger than the size of the apparatus at the normal time. This large installation region is denoted by reference numeral W14b in the drawing. Therefore, a degree of freedom of installation of the user is lowered. The size of the copier 1 in the normal state is indicated by reference numeral W14a in the drawing.

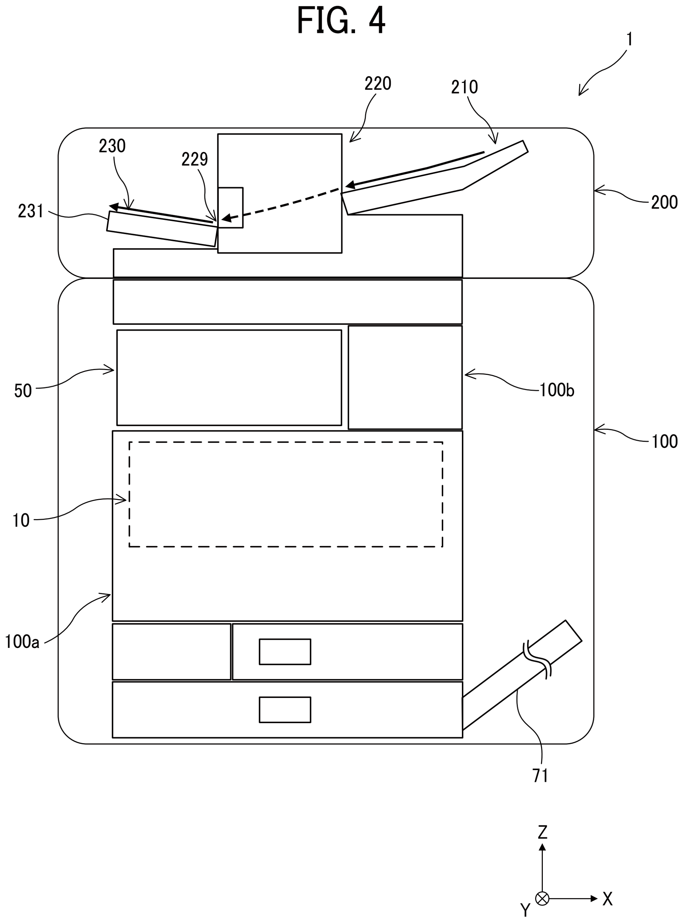

FIG. 4 is a schematic explanatory front view of an external appearance of the copier 1 according to the present embodiment. The configuration of the document reader 200 is greatly different from the configuration of the external schematic explanatory view of FIG. 12 of the comparative example. Although the document reader 200 of FIG. 12 is arranged to be biased to the left in the upper portion of the image forming apparatus, in the configuration of the present embodiment, the document reading portion 220 is arranged at the center in the width direction on the copier body 100. Then, a straight path method is employed, and the document feeding portion 210 is disposed on the right side in the width direction and the document ejection portion 230 is disposed on the left side in the width direction with respect to the document reading portion 220.

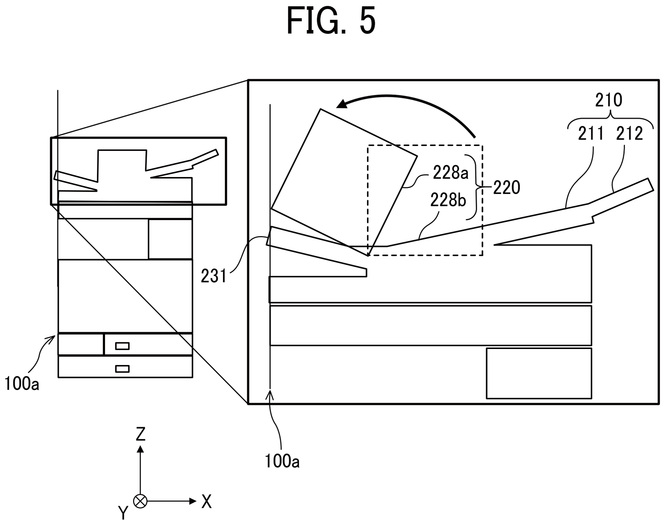

FIG. 5 illustrates a state where the document conveying path is opened for paper jam elimination processing of the document in the copier 1 according to the present embodiment (enlarged view in FIG. 5). As described with reference to FIG. 3, in the copier 1 according to the present embodiment, the upper casing 228a of the document reading portion 220 is supported to be openable with respect to the lower casing 228b, and the upper casing 228a is opened to expose the conveyance path of the document. Therefore, the upper casing 228a itself or its housing assembly corresponds to an openable housing assembly for exposing the inner conveyance path.

In FIG. 5, the position in the width direction (X direction) of the left side face 100a of the copier body 100 on the side where the upper casing 228a is opened is indicated by an auxiliary line. Even when the upper casing 228a is maximally opened as illustrated in FIG. 5, the position of the left side face 100a of the copier body 100 in the width direction is not exceeded. As described above, since the size of the apparatus does not increase even at the time of paper jam elimination processing of the document, it is not necessary to secure an installation region in advance for paper jam elimination processing as compared with the configuration of the comparative example illustrated in FIGS. 12 and 13, and the installation region can be reduced.

FIGS. 6A and 6B are schematic configuration explanatory front views of an example of a mechanism that defines a maximum opening angle of the upper casing 228a. FIG. 6A illustrates a state where the upper casing 228a is closed, and FIG. 6B illustrates a state where the upper casing 228a is restricted from further opening at the maximum opening angle. The upper casing 228a is pivotally supported on the lower casing 228b by a rotation support shaft 410. The rotation support shaft 410 is provided in a strong lower structural body 411 of the lower casing 228b. A link 413 is pivotally attached to the lower structural body 411 by a support shaft 412. A slide hole 414 into which a round bar-shaped pin 420 secured to the upper casing 228a enters is formed in the link 413. A state where the pin 420 abuts on a tip portion of the slide hole 414 farthest from the support shaft 412 corresponds to the state in FIG. 6B. When the pin 420 abuts on the tip portion, the upper casing 228a is restricted from rotating beyond the angle of this state.

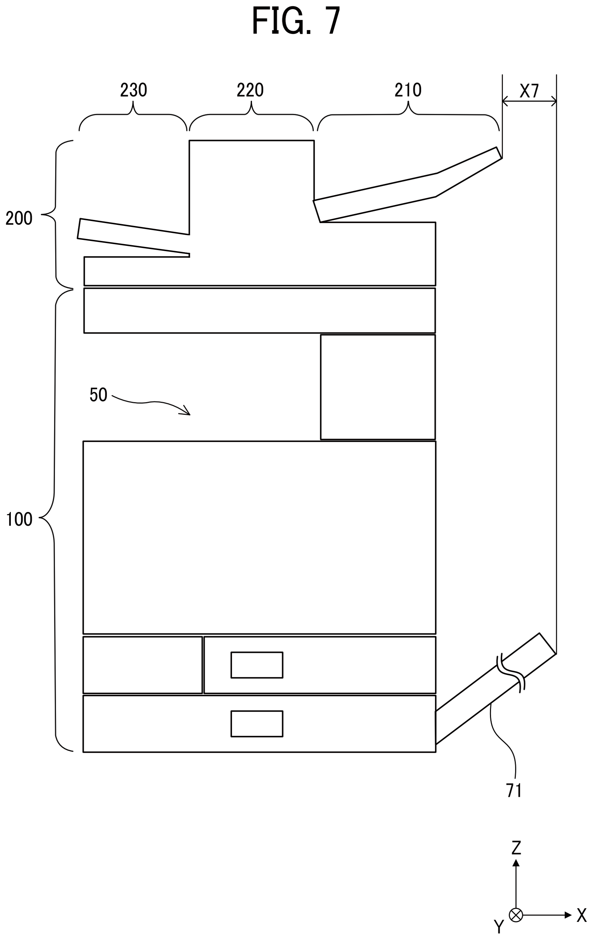

FIG. 7 is a front view illustrating a relationship of a protrusion amount between the main cover 71 of the copier body 100 and the document feeding portion 210 in the document reader 200 in the present embodiment. FIG. 7 illustrates a state where the main cover 71 of the copier body 100 is opened. In the present embodiment, since the document reading portion 220 in the document reader 200 is disposed at the center in the width direction of the copier body 100, the document feeding portion 210 may protrude from the width of the copier body 100.

On the other hand, the copier body 100 is provided with the main cover 71 for paper jam elimination processing, and the installation region of the machine including the movable range thereof needs to be secured in advance. Therefore, the document feeding portion 210 protrudes in the same direction as the protrusion of the main cover 71 of the copier body 100 and is made smaller than the protrusion amount of the main cover 71 from the side face of the copier body 100. The leading end of the main cover 71 protrudes beyond the leading end of the document feeding portion 210 by an amount indicated by reference numeral X7 in the drawing. As a result, even when the document feeding portion 210 protrudes, the installation region of the machine can be prevented from being increased.

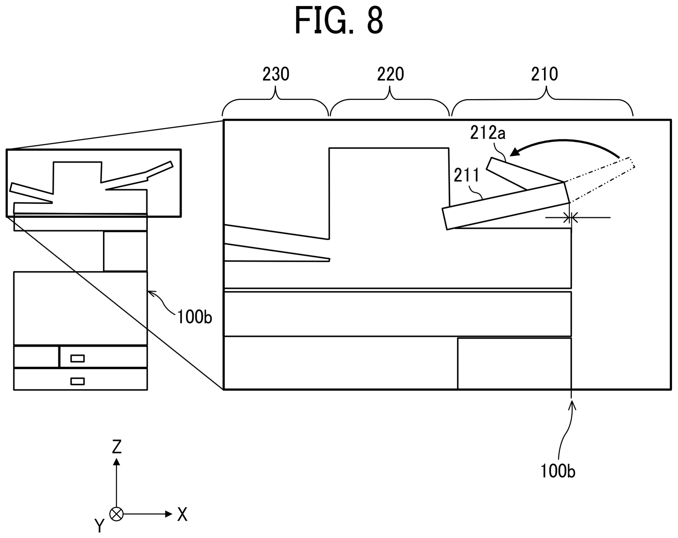

FIG. 8 illustrates another configuration example of the document feeding portion 210 according to the present embodiment. As described above with reference to FIG. 3, the extended portion from the document table 211 constituting the document feeding portion 210 is replaced with a folding document table 212a instead of the drawable document table 212. In a case where the copier 1 is transported to a user or the like, the copier 1 is generally transported in a packaging box or the like. In a case where the place of production of the machine is different from the country of use, the machine is not directly delivered to the user from the place of production, but a plurality of machines may be transported to a factory or the like in the country of use at the same time by a container or the like, and then transported to the user.

In this case, as the size of the packaging box is smaller, the number of machines that can be put in the container is also increased, and thus there is an advantage that the transportation cost can be reduced. Therefore, in the illustrated example, the leading end of the document table 211 is set not to exceed the side face (100b) of the copier body 100 so that the size of the packaging box, in particular, the size in the width direction, can be minimized. When the folding document table 212a is folded, the folding document table 212a can also be prevented from exceeding the side face (100b). Note that, also in the case of using the drawable document table 212 illustrated in FIG. 3, it is preferable to set the leading end of the document table 211 not to exceed the side face (100b) of the copier body 100 and not to exceed the side face (100b) when the drawable document table 212 is retracted, in order to reduce the size of the packaging box.

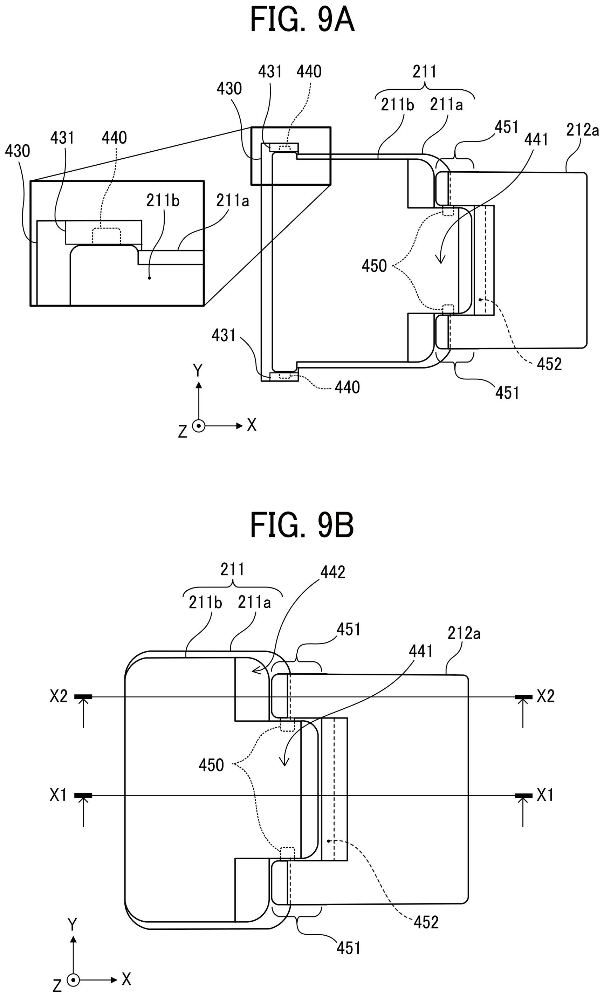

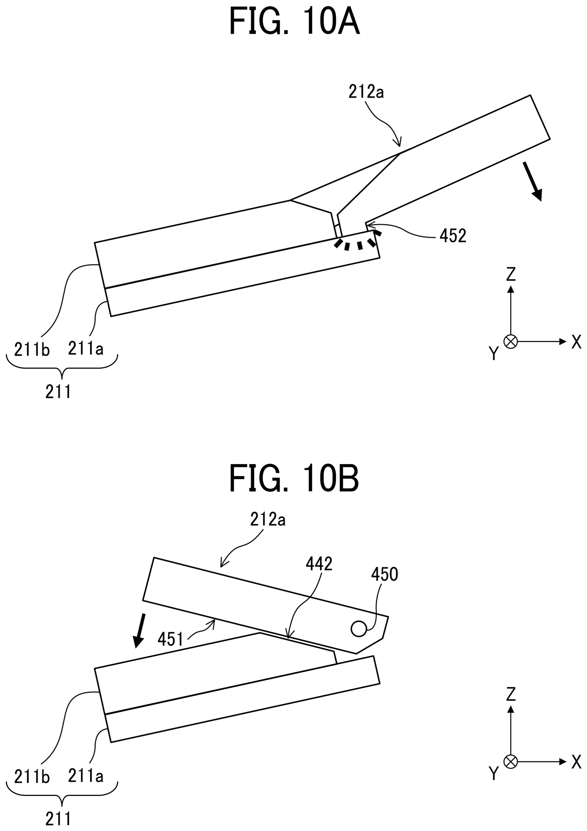

FIGS. 9A and 9B are explanatory plan views of an example of a folding structure of the folding document table 212a. FIGS. 10A and 10B are explanatory front views thereof, where FIG. 10A is an explanatory view of a cross section taken along X1-X1 in FIG. 9B, and FIG. 10B is an explanatory view of a cross section taken along X2-X2. FIG. 10A illustrates a state where the folding document table 212a is extended, and FIG. 10B illustrates a state where the folding document table 212a is folded.

As partially enlarged and illustrated in FIG. 9A, the document table 211 to which the folding document table 212a is attached is attached such that protrusions 440 provided at both ends in the width direction enter recesses formed in a pair of attachment portions 431 which are deformable and a part of a structure 430 of the document reader 200. The protrusions 440 can be inserted into or removed from the recesses while the pair of attachment portions 431 is deformed.

The document table 211 includes a table lower cover 211a and a table upper cover 211b, and the table upper cover 211b is attached to a central protrusion 441 extending to the leading end side at the center in the width direction (Y direction) such that the folding document table 212a is pivotally supported. A shaft 450 of the folding document table 212a is rotatably inserted into bearing recesses on both side face portions of the central protrusion 441.

The shaft 450 of the folding document table 212a is provided on each arm 451 extending on both sides of the central protrusion 441 of the document table 211. The folding document table 212a includes a leg 452 that abuts on the upper surface of the table lower cover 211a and regulates the posture in which the folding document table 212a is most opened, on the lower surface of a portion facing the central protrusion 441 of the document table 211 in the width direction (see FIG. 10A).

The portion of the table upper cover 211b of the document table 211 facing the arm 451 of the folding document table 212a is an inclined surface portion 442, and when the folding document table 212a is folded, the arm 451 abuts and the folding of the folding document table 212a is completed (the closing position is regulated) (see FIG. 10B).

In the configuration of the embodiment described with reference to FIGS. 1 to 7, since the document reading portion is at the center of the apparatus, the document placing portion may protrude from the apparatus body. In a case where the document placing portion is folded as illustrated in FIGS. 8 to 10B and does not protrude from the apparatus body, transportation can be performed without increasing the apparatus size, so that the transportation cost can be reduced.

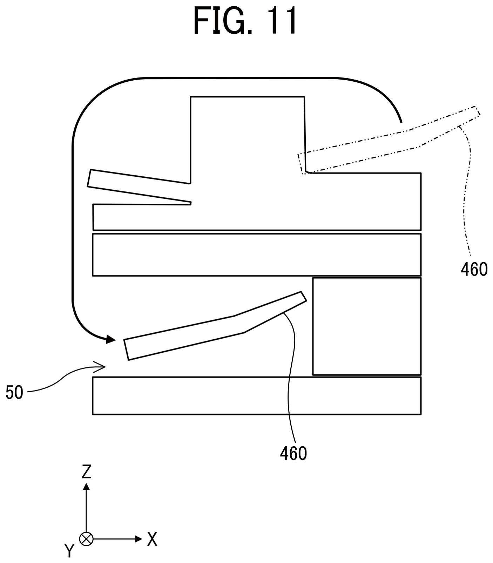

FIG. 11 illustrates still another configuration example of the document feeding portion 210 according to the present embodiment. In the present configuration example, a document platen constituting the document feeding portion 210 of the document reader 200 is configured to be detachable, and the detached constituent members of the document feeding portion have a shape and size that can be stored in the apparatus body as they are. A specific storage location is the in-body ejector 50 that includes an opening for external access and ejects the recording medium on which an image is formed. Reference numeral 460 denotes a detachable document platen.

In the configuration examples of FIGS. 8 to 10B, the document placing portion is foldable so as not to protrude from the apparatus body. However, in order to achieve a foldable configuration, it is necessary to divide at least the component into two, which may increase the cost of the component. Therefore, the document placing portion is configured to be detachable, and the document placing component is stored in an area (for example, in-body ejector) in the image forming apparatus at the time of transportation, so that the transportation cost can be reduced.

The copier 1 described above with reference to the drawings can be understood as follows. That is, in an image forming apparatus provided with an image forming unit that forms an image on a recording medium, an apparatus body provided with the image forming unit, and a document reader that reads a document on the apparatus body, the image forming apparatus includes a main cover (a portion opened at the time of paper jam elimination processing) provided on a side face portion of the apparatus body so as to be openable to remove a jammed sheet and a remaining sheet, in which the document reader includes a document feeding portion (document table) on which a document before being read is placed, a document reading portion that reads a document, a document ejection port through which the document read by the document reading portion is ejected from the reading portion, and an document ejection portion (document ejection portion) on which the document ejected from the document ejection port is stacked, and the document reading portion is openable when an internal jammed sheet and a remaining sheet are removed, the document reading portion is provided closer to a center portion than both end portions of the apparatus body, and when the document reading portion is opened, the document reading portion does not protrude from a side face on a side opposite to the main cover (a portion opened at the time of paper jam elimination processing) in the apparatus body, the document feeding portion (document table) protrudes from the apparatus body in the same direction as the main cover (a portion opened at the time of paper jam elimination processing), and a protrusion amount of the document feeding portion (document table) is smaller than a protrusion amount when the main cover (a portion opened at the time of paper jam elimination processing) is opened. According to this, since the occupied area of the image forming apparatus is reduced and only one side protrudes even at the time of paper jam elimination processing, the apparatus width at the time of paper jam elimination processing can be narrowed.

Although the present embodiment has been described above, the present embodiment is not limited to such specific embodiments. Unless particularly limited in the above description, various modifications and changes can be made without departing from the scope of the gist of the present embodiment recited in claims.

The effects in the present embodiment correspond to most favorable effects from the present embodiment. Thus, effects according to the present embodiment are not limited to the effects in the present embodiment.

An image forming apparatus (1) includes: an apparatus body (100); an image forming unit (10) in the apparatus body, the image forming unit (10) configured to form an image on a medium; a document reader (200) including: a document feeding portion (210) configured to feed a document before reading; a document reading portion (220) configured to read an image on the document fed from the document feeding portion (210) through a document conveyance path in a document conveyance direction (X); and a document ejection portion (230) configured to stack the document ejected from the document reading portion, and the document reading portion (220) includes a housing assembly (228a) configured to open to expose the document conveyance path in the document reading portion (220), and the housing assembly (228a) is disposed inside a side face of apparatus body (100) in the document conveyance direction (X) when the housing assembly (228a) is opened.

The apparatus body (100) includes: a medium conveyance path configured to guide the medium conveyed in the apparatus body (100); and a main cover (71) disposed on another side face of the apparatus body (100) opposite to the side face of the apparatus body (100), and the main cover (71) is opened to expose the medium conveyance path. The document feeding portion (210) protrudes from said another side face of the apparatus body (100) by a first amount, and the main cover (71) protrudes from said another side face of the apparatus body (100) by a second amount larger than the first amount when the main cover is opened.

The document feeding portion (210) is foldable, and the document feeding portion (210) is disposed inside said another side face of the apparatus body (100) in the document conveyance direction when the document feeding portion (210) is folded. The document reading portion (220) is disposed between the document feeding portion (210) and the document ejection portion (230) in the document conveyance direction, and the document reading portion (220) is disposed closer to a center portion than both ends of the apparatus body (100).

The document reader (200) has a straight path, straight from the document feeding portion (210) to the document ejection portion (230) through the document reading portion (220). The document feeding portion (210) is detachable from the document reader (200), and the apparatus body (100) includes a storage configured to store the document feeding portion (210), detached from the apparatus body (100), inside the apparatus body (100). The image forming apparatus (1) further includes: an in-body ejector (50) including an opening configured to receive the medium ejected from the image forming unit (10), and the in-body ejector (50) includes the storage.

The above description is exemplary, and the following aspects of the present embodiment have respective particular effects. Reference signs in parentheses with which constituents are denoted in each aspect indicate the corresponding members. However, the constituents are not limited to these examples of members.

### Aspect 1

According to Aspect 1, an image forming apparatus (1) includes: an apparatus body (100) provided with an image forming unit (10) forming an image on a recording medium; and a document reader (200) configured to read a document provided on the apparatus body (100), the document reader (200) including: a document feeding portion (210) on which a document before being read is placed; a document reading portion (220) reading a document; a document ejection port (229) through which the document read by the document reading portion (220) is ejected from the document reading portion (220); and an document ejection portion (230) on which the document ejected from the document ejection port (229) is stacked, a housing assembly (228a) exposing an inner conveyance path in the document reading portion (220) being openable and closable, and when the housing assembly (228a) is opened, the housing assembly (228a) not protruding from a side face of apparatus body (100).

According to this, it is not necessary to widen the installation region of the image forming apparatus by the opening of the housing assembly of the document reading portion, and it is possible to avoid enlargement of the installation region by enabling the housing assembly of the document reading portion to be openable. Here, the side face of the apparatus body does not include a sheet feeding portion that temporarily protrudes, for example, takes a protruding posture, a sheet ejection portion that partially protrudes from the side face of the apparatus body, and the like.

A document conveyor according to a comparative example includes a document feeding portion, a document ejection portion, and a conveying unit that conveys a document along a conveyance path between both the document placing portions is provided on a center portion side of both ends of an image forming apparatus body. This document conveyor is different from a document reader including a reading unit of according to the present application. This type of simple automatic document conveyor is disposed on the copier body so as to satisfy the restriction that the conveyance path of the document includes the document reading position of the copier body. Since the copier body of the comparative example is a wide device including the reverse path, the automatic conveyor is merely disposed at the center in order to satisfy the above requirement. The opening and closing of the housing assembly for exposing the inner conveyance path is not mentioned.

### Aspect 2

According to Aspect 2, in the image forming apparatus (1) of Aspect 1, the apparatus body (100) includes, on a side face portion of the apparatus body (100), a main cover (71) for removing a jammed sheet and a remaining sheet, and a side face from which the document reading portion (220) does not protrude is a side face of the apparatus body (100) opposite to the main cover (71).

According to this, it is possible to avoid unnecessary expansion of the installation region to the opposite side in addition to the side face on the main cover (71) side in the apparatus body (100) where it is necessary to secure the installation region.

### Aspect 3

According to Aspect 3, in the image forming apparatus (1) of Aspect 2, the document feeding portion (210) protrudes from the apparatus body (100) to the side face portion including the main cover (71), and a protrusion amount of the document feeding portion (210) is smaller than a protrusion amount when the main cover (71) is opened.

According to this, it is not necessary to provide a securing region beyond a securing region for the main cover on the side of the main cover (71) in the apparatus body (100) where it is necessary to secure the installation region.

### Aspect 4

According to Aspect 4, in the image forming apparatus (1) of Aspect 3, the document feeding portion (210) is foldable, and does not protrude from the apparatus body (100) when the document feeding portion (210) is folded.

According to this, the transportation cost of the image forming apparatus can be reduced.

### Aspect 5

According to Aspect 5, in the image forming apparatus (1) of Aspect 1, the document feeding portion (210), the document reading portion (220), and the document ejection portion are arranged in this order in the right-left direction as viewed from the front of the image forming apparatus (1), and the document reading portion (220) is provided closer to a center portion than both ends of the apparatus body (100).

According to this, when the housing assembly (228a) of Aspect 1 is opened, it is easy to configure such that the housing assembly (228a) does not protrude from the side face of the apparatus body (100). The conveyance path of the document can be a so-called straight path, and the visibility of the document is favorable.

### Aspect 6

According to Aspect 6, in the image forming apparatus (1) of Aspect 1, the document reader (200) does not have a document reverse conveying path that is reversed and overlaps in a vertical direction.

According to this, the space of the document reading portion can be saved as compared with the document reader also including the document reverse conveying path that is reversed and overlaps in the vertical direction.

### Aspect 7

According to Aspect 7, in the image forming apparatus (1) of Aspect 1, the document feeding portion (210) is detachable from the document reader (200), and the detached document feeding portion (210) has a shape and a size enough to be stored in the apparatus body (100).

According to this, the transportation cost of the image forming apparatus can be reduced.

### Aspect 8

According to Aspect 8, in the image forming apparatus (1) of Aspect 7, a storage location is an in-body ejector (50) that includes an opening for external access and ejects a recording medium on which an image is formed.

According to this, the transportation cost can be reduced without changing the structure in the image forming apparatus.

## Claims

1. An image forming apparatus (1) comprising:
an apparatus body (100);
an image forming unit (10) in the apparatus body,
the image forming unit (10) configured to form an image on a medium;
a document reader (200) including:
a document feeding portion (210) configured to feed a document before reading;
a document reading portion (220) configured to read an image on the document fed from the document feeding portion (210) through a document conveyance path in a document conveyance direction (X); and
a document ejection portion (230) configured to stack the document ejected from the document reading portion, and
wherein the document reading portion (220) includes a housing assembly (228a) configured to open to expose the document conveyance path in the document reading portion (220), and
the housing assembly (228a) is disposed inside a side face of apparatus body (100) in the document conveyance direction (X) when the housing assembly (228a) is opened.

2. The image forming apparatus (1) according to claim 1,
wherein the apparatus body (100) includes:
a medium conveyance path configured to guide the medium conveyed in the apparatus body; and
a main cover (71) disposed on another side face of the apparatus body (100) opposite to the side face of the apparatus body (100), and
the main cover (71) is opened to expose the medium conveyance path.

3. The image forming apparatus (1) according to claim 2,
wherein the document feeding portion (210) protrudes from said another side face of the apparatus body (100) by a first amount, and
the main cover (71) protrudes from said another side face of the apparatus body (100) by a second amount larger than the first amount when the main cover is opened.

4. The image forming apparatus (1) according to claim 3,
wherein the document feeding portion (210) is foldable, and
the document feeding portion (210) is disposed inside said another side face of the apparatus body (100) in the document conveyance direction when the document feeding portion (210) is folded.

5. The image forming apparatus (1) according to any one of claims 1 to 4,
wherein the document reading portion (220) is disposed between the document feeding portion (210) and the document ejection portion (230) in the document conveyance direction, and
the document reading portion (220) is disposed closer to a center portion than both ends of the apparatus body (100).

6. The image forming apparatus (1) according to any one of claims 1 to 5,
wherein the document reader (200) has a straight path, straight from the document feeding portion (210) to the document ejection portion (230) through the document reading portion (220).

7. The image forming apparatus (1) according to any one of claims 1 to 6,
wherein the document feeding portion (210) is detachable from the document reader (200), and
the apparatus body (100) includes a storage configured to store the document feeding portion (210), detached from the apparatus body (100), inside the apparatus body (100).

8. The image forming apparatus (1) according to claim 7, further comprising:
an in-body ejector (50) including an opening configured to receive the medium ejected from the image forming unit (10), and
the in-body ejector (50) includes the storage.
